# EUROPEAN PATENT APPLICATION

(11) **EP 0 724 275 A1**
(43) Date of publication of application: **31.07.1996**
(21) Application number: 96300087.2
(22) Date of filing: 04.01.1996
(51) Int. Cl.: H01F 38/04, H01F 38/16

(54) **High-voltage transformer equipment**

(30) Priority: 25.01.1995 JP 30094/95
(71) Applicant: Yamamoto, Makoto, Nagano (JP)
(72) Inventor: Yamamoto, Makoto, Nagano (JP)
(74) Representative: Ben-Nathan, Laurence Albert

(57) **Abstract**

The aim is to provide a large-capacity transformer with a light weight and at a low cost by combining a plurality of small- or medium-capacity transformers. Molded transformers are constructed by molding single-phase transformers using an insulating molding material. A transformer set 14 is obtained by connecting four of these molded transformers 10 in series. A trnsformer body 16 which functions as a large-capacity transformer is constructed by V-connecting two of these transformer sets 14.

## Description

### BACKGROUND OF THE INVENTION

### 1. Field of the Invention

The present invention relates to a high-voltage transformer equipment and more specifically to a high-voltage transformer equipment in which a plurality of transformer sets, each obtained by connecting a plurality of transformers in series, are connected to each other so that the voltage applied to the individual transformers when a high voltage is received can be reduced.

### 2. Prior Art

Inside cubicles installed at substations, etc., current transformers used for current measurement, instrument transformers used for voltage measurement, and relays, etc. are provided in a prescribed layout around power distribution transformers; and these respective devices are connected by cables. The power distribution transformers are commonly of the oil-containing type, in which the interior of an iron box is filled with an insulating oil, and the transformer main body is immersed in the insulating oil. In current practice, furthermore, a single oil-containing transformer which is constructed according to specifications that correspond to the designated voltage received is installed and operated in a high-voltage transformer equipment.

In the case of the oil-containing transformers, transformers are manufactured according to various designated received voltages in various types of plants, buildings and substations, Accordingly, special transformers with a large size and a high withstand voltage must be manufactured, which leads to the drawback of increased costs. Furthermore, it has not been easy to handle various received voltages. In addition, since high-voltage substation facilities are constructed using a single large-capacity transformer, the entire facility may become inoperable due to short-circuiting accidents, etc.; and in such cases, time is required for the restoration of service, and maintenance costs, etc. are increased.

Furthermore, the oil-containing transformers have drawback: as the capacity of the transformer increases, the size of the transformer increases so that there is an increase in the installation area required; and at the same time, manufacturing costs are also increased. Furthermore, in cases where a large-capacity transformer, such as 20,000 KVA, is manufactured, the weight of such a transformer may reach as much as 100 tons, and special vehicles are required for the transportation of such transformers. Moreover, during such transportation, traffic restrictions are required, and roads and bridges must be reinforced. Accordingly, transportation costs are increased, and the transportation of such transformers causes problems for road users.

### SUMMARY OF THE INVENTION

The present invention is obtained in light of the drawbacks inherent in the prior art described above, and it has been proposed in order to eliminate the drawbacks in an appropriate manner. The object of the present invention is to provide a high-voltage transformer equipment in which a plurality of transformers are connected in series so that high voltages are divided among the plurality of transformers, thus reducing the voltage applied to each individual transformer so that various received voltages can easily be handled, in which the transformer coils are molded so that there is no need for using an external covering or oil, which is designed so that a transformer of any desired capacity can be constructed with a light weight and at a low cost, which is convenient to transport , and which makes it possible to reduce the installation area required.

In order to achieve the object, the high-voltage transformer equipment of the present invention is characterized in that transformers are molded using a high-strength insulating molding material which has refractory properties, flame-retarding properties, vibration resistance and corrosion resistance, etc., a plurality of molded transformers thus obtained are connected in series to form a transformer set, and a plurality of these transformers sets are connected to each other so that the voltage applied to each individual molded transformer in the case of a high voltage can be reduced, and so that the frequency can be adjusted.

### BRIEF DESCRIPTION OF THE DRAWINGS

Figure 1 is a schematic structural diagram of one of the molded transformers which forms a high-voltage transformer equipment in accordance with one embodiment of the present invention.

Figure 2 is a wiring diagram of a transformer set in the same embodiment.

Figure 3 is a wiring diagram of a transformer body in a high-voltage transformer equipment in one embodiment of the present invention.

Figure 4 is a wiring diagram of a transformer body in the case of a different combination of molded transformers.

Figure 5 is a wiring diagram of a transformer body in the case of a different combination of molded transformers.

Figure 6 is a front view of a molded device.

Figure 7 is a plan view of the molded device.

Figure 8 is a side view of the molded device.

Figure 9 is a schematic structural diagram which illustrates a transformer structure.

Figure 10 is a schematic structural diagram which illustrates another example of a transformer structure.

Figure 11 is an explanatory diagram which illustrates the connection of voltage dividing resistors between respective molded transformers.

### DETAILED DESCRIPTION OF THE PREFERRED EMBODIMENTS

Next, a preferred embodiment of the high-voltage transformer equipment of the present invention will be described with reference to the attached figures.

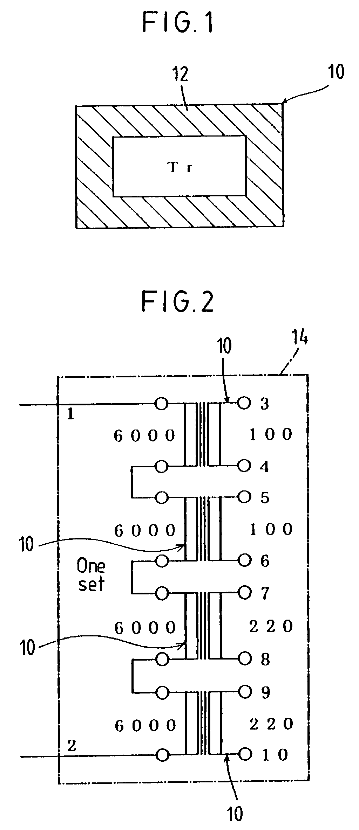

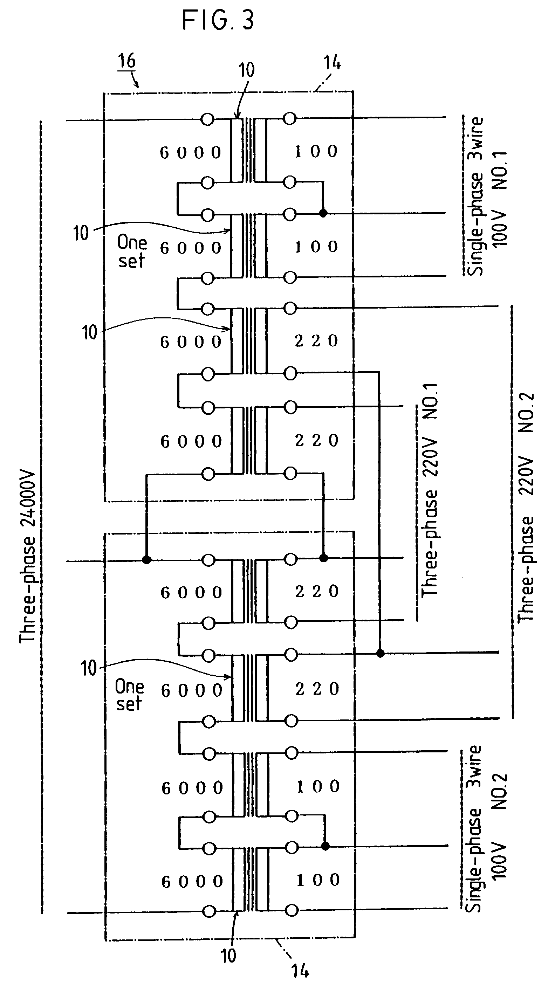

Figure 1 shows the schematic construction of one of the molded transformers which makes up a high-voltage transformer equipment of the embodiment. This molded transformer 10 is constructed by molding a single-phase transformer Tr with a high-strength insulating molding material 12 which has refractory properties, vibration resistance and corrosion resistance, etc. Synthetic resins such as epoxy or polyester resins, etc., synthetic rubbers such as butyl rubbers or ethylene-propylene rubbers, etc., or flame-retarding materials such as artificial marble or artificial diamond, etc., may be preferably used as the molding material 12. Furthermore, a small size transformer is used as the transformer Tr. As shown in Figure 2, a plurality of molded transformers 10 (four transformers in the embodiment) are connected in series so that a transformer set 14 is constructed. Moreover, two transformer sets 14, 14 obtained in this way are V-connected as shown in Figure 3, so that a transformer body 16 which functions as a large-capacity transformer is constructed. Appropriate devices such as current transformers, instrument transformers and relays, etc. are connected to this transformer body 16.

For example, in the embodiment, four 6,000 V single-phase transformers Tr can be connected in series to form a transformer set 14; and two of these transformers sets 14, 14 are V-connected so that the voltage on the primary side is three-phase 24,000 V. Furthermore, on the secondary side, the following voltages can be respectively led out: single-phase 3-wire 100 V, three-phase 220 V, three-phase 220 V and single-phase 3-wire 100 V. Furthermore, the transformer body 16 shown in the present embodiment is not restricted to the above example; and secondary-side voltages can be freely set as desired. For example, it would also be possible to lead out a high voltage of 3300 V and a low voltage of 440 V. In other words, the voltages and power values of the transformer body 16 constructed as described above can be set as desired by varying the capacities and method of combination of the single-phase transformers Tr used. The transformer set 14 shown in Figure 2 is constructed from two transformers with a primary-side voltage of 6,000 V and a secondary-side voltage of 100 V and two transformers with a primary-side voltage of 6,000 and a secondary-side voltage of 220 V.

In cases where a transformer body is constructed, as decried above, by connecting a plurality of small size transformers Tr in series, a high voltage can be dispersed among the plurality of transformers Tr so that the voltage applied to each individual transformer Tr can be reduced, In other words, there is no need to manufacture a special transformer with a large size and a high withstand voltage in order to handle high voltages, and such high voltages can be handled using low-cost small size transformers Tr. Furthermore, voltages and frequencies can be freely adjusted by connecting relays to the primary-side or secondary-side taps of the respective transformers Tr and by controlling specified relays by on-off control.

Furthermore, in cases where a large-capacity transformer body 16 is constructed by combining small size transformers Tr, the respective molded transformers 10 are connected at the installation site. Accordingly, the molded transformers 10 which are of light-weight can be transported separately. More specifically, the weight of a single molded transformer 10 is extremely light (for example, a molded transformer 10 that uses a 6,000 V single-phase transformer Tr weighs approximately 3 tons); accordingly, no special vehicle is required for the transportation of such transformers, and there is no need to reinforce roads or bridges. Thus, transportation costs can be reduced. Furthermore, small size transformers Tr are inexpensive, and therefore, even in cases where a plurality of transformers Tr are combined, the overall unit can be manufactured at an extremely low cost compared to a single large oil-containing transformer. For example, the cost of a high-voltage transformer equipment using a single 20,000 KVA oil-containing transformer is approximately 1,000,000,000 yen; in contrast, the cost of a high-voltage transformer equipment formed by combining small size transformers as in the present embodiment can be kept to approximately 50,000,000 yen.

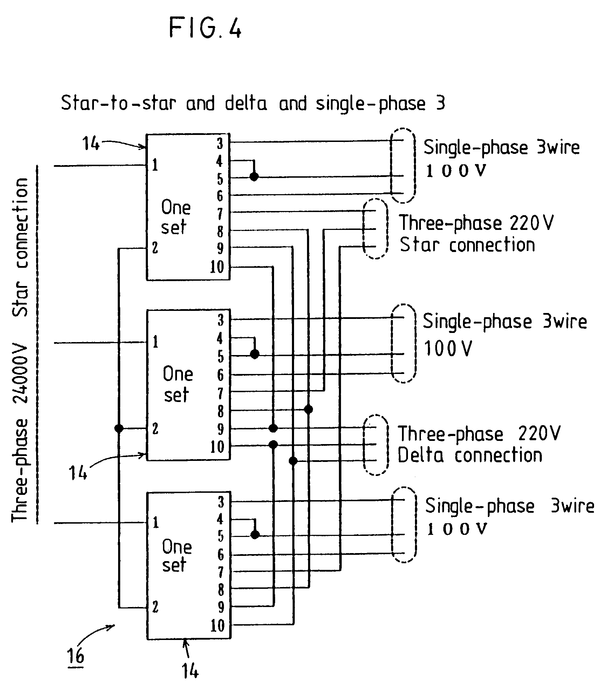

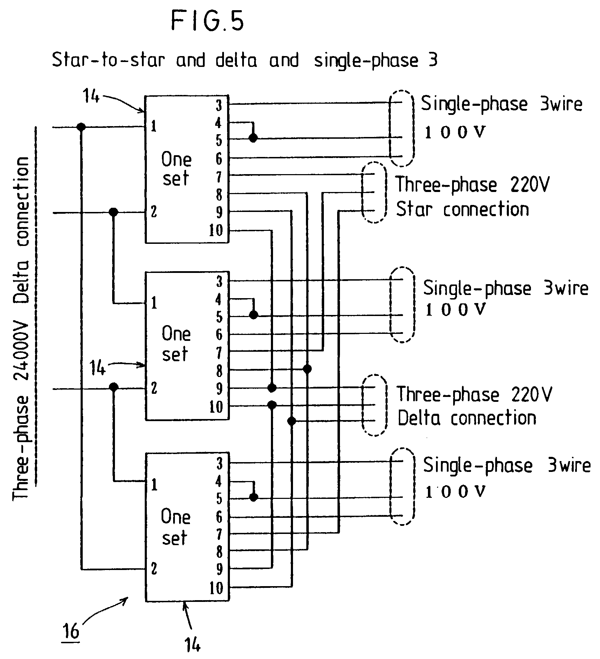

Figure 4 is a wiring diagram which shows the star-to-star and delta connection of three transformer sets 14, 14 and 14. Here, the primary-side voltage can be set at three-phase 24,000 V. On the secondary side, the following voltages can be respectively led out: single-phase 3-wire 100 V, three-phase 220 V, single-phase 3-wire 100 V, three-phase 220 V and single-phase 100 . Furthermore, Figure 5 is a wiring diagram which shows the delta-to-star and delta connection of three transformer sets 14, 14 and 14. Here, the primary-side voltage can be set at three-phase 24,000 V; and on the secondary side, the following voltages can be respectively led out: single-phase 3-wire 100 V, three-phase 220 V, single-phase 3-wire 100 V, three-phase 220 V and single-phase 100 V. In the embodiments shown in both Figures 4 and 5, the voltages on the secondary side can be freely set; for example, besides the voltages described above, it would be possible to set a high voltage of 3,300 V and a low voltage of 440 V. Furthermore, the method of connection of the plurality of transformer sets 14 is not limited to the examples shown in the figures, and various types of wiring may be employed, so that various voltages and power values can be handled.

In the high-voltage transformer equipment of the present embodiment, the voltages can be varied by using different combinations from those described above. For example, a transformer set 14 may be constructed by connecting in series four 220 V single-phase transformers Tr, each of which has a primary-side voltage of 6,000 V and a secondary-side voltage of 220 V. Then, by connecting three such transformer sets 14, 14 and 14 by means of star-to-star and star and delta connections, it is possible to obtain a transformer body 16 in which the primary-side voltage is three-phase 24,000 V and the secondary-side voltages are three-phase 440 V, three-phase 220 V and three-phase 220 V. Alternately, a transformer set 14 may be constructed by connecting in series two single-phase transformers Tr with a primary-side voltage of 6,000 V and a secondary-side voltage of 3,300 V for a total of four single-phase transformers Tr. Then, by connecting three such transformer sets 14, 14 and 14 using delta-to-star and delta connections, it is possible to obtain a transformer body 16 in which the primary-side voltage is three-phase 24,000 V, and the secondary-side voltages are three-phase 440 V and three-phase 6,600 V.

In the case of conventional oil-containing transformers, there is a danger of fire due to the leakage of oil if the transformers should fall over. Accordingly, a plurality of such conventional transformers cannot be stacked in a vertical configuration. In the case of the molded transformers 10, on the other hand, there is absolutely no danger of fire due to the transformers falling over. Accordingly, such molded transformers 10 can be stacked in a vertical configuration. As a result, in cases where a transformer body 16 which functions as a large-capacity transformer is constructed by combining a plurality of small size transformers Tr, the installation area required is greatly reduced compared to the installation area required for a conventional oil-containing transformer. Thus, a saving of space can be realized.

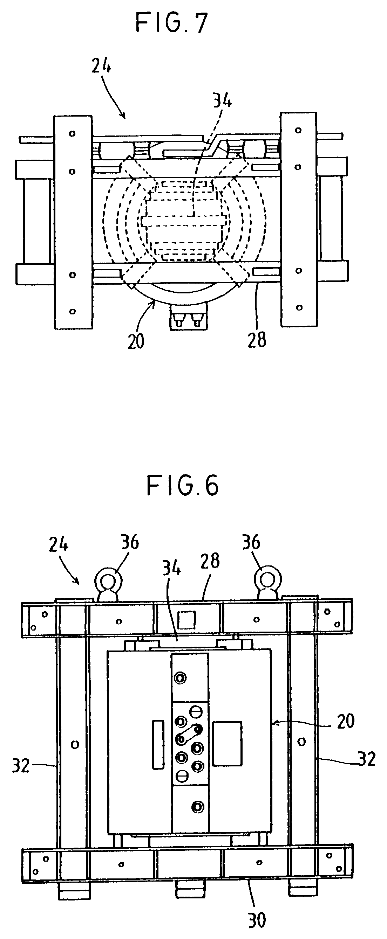

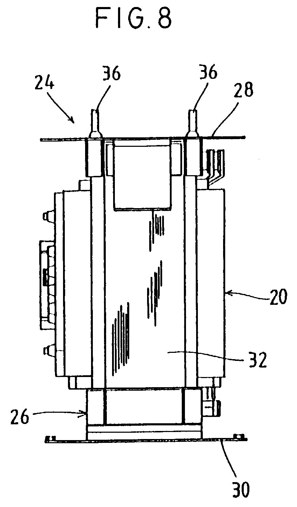

Figures 6 through 8 illustrate a transformer device 25 which is equipped with a transformer structure 20. Here, the transformer structure 20 is positioned and fastened in place between the upper frame member 28 and lower frame member 30 of a frame body 26 which is formed in the shape of a rectangular frame. This transformer device 24 is constructed so that it can be stacked in the vertical direction and connected via the frame body 26. Moreover, side frame members 32 on both sides of the frame body 26 are formed by fastening a plurality of steel plates to each other by means of bolts, thus causing the side frame members 32 to function as magnetic cores through which magnetic flux from the transformer structure 20 flows. Furthermore, a magnetic core 34 is inserted into the center of the coil in the transformer structure 20. The reference numeral 36 In Flgure 6 indicates bolts for transportation use which are used during the transportation of the transformer device 24. These bolts 36 are removed when the transformer device 24 is stacked with other transformer devices.

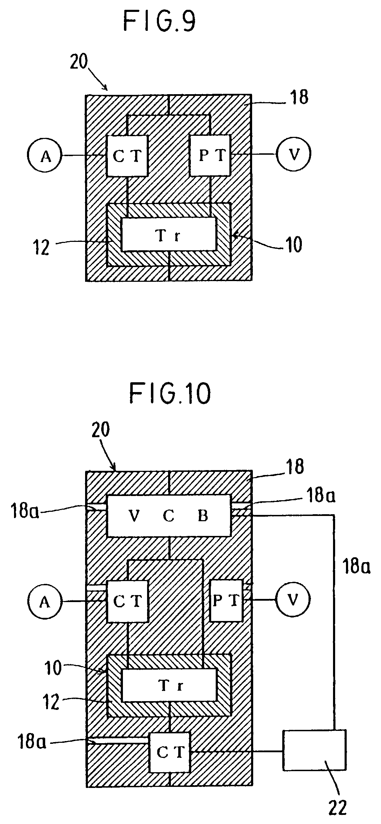

As shown in Figure 9, the transformer structure 20 is constructed so that a current transformer CT and an instrument transformer PT are connected to the primary side of the single-phase transformer Tr in the molded transformer 10, and the molded transformer 10, current transformer CT and instrument transformer PT are molded into an integral unit by means of a molding material 18 similar to that described above. Then, a transformer set 14 is constructed by connecting the respective transformers Tr in a plurality of such transformer structures 20 in series. Alternately, as shown in Figure 10, it would also be possible to connect a relay VCB which is molded as an integral unit with the transformer structure 20 to the current transformer CT and instrument transformer PT which are connected to the primary side of the single-phase transformer Tr in the transformer structure 10. An ammeter A, which is connected to the current transformer CT, and a voltmeter V, which is connected to the instrument transformer PT, are installed outside the molding material 18.

In the transformer structure 20 shown in Figure 10, an overcurrent detection circuit (or demand meter) 22 which is installed outside the molding material 18 is connected to a current transformer CT which is connected to the secondary side of the transformer Tr, and this overcurrent detection circuit 22 is connected to the relay VCB. Accordingly, when a current exceeding a prescribed value flows through the transformer Tr, such a current is detected by the current transformer CT, and the relay VCB is actuated by the overcurrent detection circuit 22 so that the circuit is instantaneously broken, thus protecting the transformer Tr. Through-holes 18a are opened through the molding material 18 in positions corresponding to the positions of the current transformers CT, instrument transformer PT and relay VCB, so that the dissipation of heat and the movement of movable parts can be smoothly accomplished.

In cases where the molded transformer 10, current transformers CT, instrument transformer PT and relay VCB are molded by a molding material 18 as shown in Figures 9 and 10, the respective devices are protected from deterioration and damage; accordingly, the durability and useful life of the system are improved, and running costs can be reduced. Furthermore, since the single-phase transformer Tris molded by means of an insulating molding material 12, accidental electrical shocks inside the cubicle can be effectively prevented, so that cleaning, maintenance and inspection work can be safely performed.

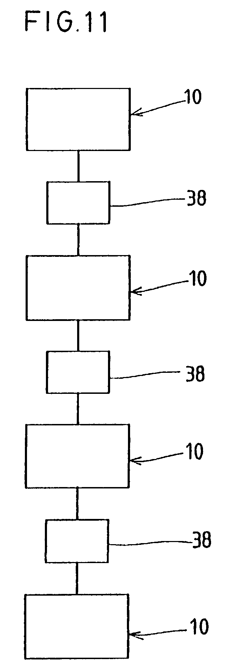

Furthermore, as shown in Figure 11, it is also possible to connect voltage dividing resistors 38 in series between respective molded transformers 10 and 10 which are connected in series, and to adjust the voltage by means of these resistors 38. Alternately, it would also be possible to adjust the voltage by connecting reactors in series instead of the voltage dividing resistors 38. Furthermore, it is also possible to connect voltage dividing resistors 38 or reactors in parallel between the molded transformers 10 and 10.

In the embodiment described above, a transformer set is constructed by connecting four molded transformers. However, the present invention is not limited to this configuration. It would be possible to connect one, two or three transformers, or five or more transformers. Furthermore, the wiring method used to connect a plurality of transformer sets may be appropriately selected at the installation site. Moreover, automatic voltage regulators may be connected to the taps of the respective molded transformers, and voltages and frequencies may be freely varied by installing relays on the low-voltage side and high-voltage side of each transformer and by performing on-off control of specified transformers by remote operation. As a result, voltage drops occurring in cases where the respective loads of high-voltage substation facilities are distant from each other can easily be handled.

## Claims

1. A high-voltage transformer equipment which is characterized by the fact that transformers (Tr) are molded using a high-strength insulating molding material (12) which has refractory properties, flame-retarding properties, vibration resistance and corrosion resistance, etc., a plurality of thus molded transformers (10) are connected in series to form a transformer set (14), and a plurality of these transformer sets (14) are connected to each other so that a voltage applied to each individual molded transformer (10) in the case of high voltage can be reduced and so that the frequency can be adjusted.

2. A high-voltage transformer equipment according to claim 1, in which voltage diving resistors and reactors are connected in series or in parallel between said molded transformers which are connected in series, so that a voltage can be adjusted by means of said voltage diving resistors and reactors.
